# EUROPEAN PATENT SPECIFICATION

(11) **EP 4 071 991 B1**
(45) Date of publication and mention of the grant of the patent: **30.09.2026**
(21) Application number: 22167240.5
(22) Date of filing: 07.04.2022
(51) Int. Cl.: H02M 3/00, H02M 7/48, H02M 1/00, H02M 1/08, H02M 1/32, H02M 1/36, H03K 17/08, H03K 17/16

(54) **CONTROL CIRCUIT, CONTROL METHOD AND RESONANT CONVERTER**
STEUERSCHALTUNG, STEUERVERFAHREN UND RESONANZWANDLER
CIRCUIT DE COMMANDE, PROCÉDÉ DE COMMANDE ET CONVERTISSEUR RÉSONANT

(30) Priority: 08.04.2021 CN 202110378994
(43) Date of publication of application: 12.10.2022
(73) Proprietor: Silergy Semiconductor Technology (Hangzhou) Ltd, Zhejiang 310051 (CN)
(72) Inventor: WANG, Longqi, Zhejiang, 310051 (CN); WANG, Hanxiang, Zhejiang, 310051 (CN)
(74) Representative: Ström & Gulliksson AB

(56) References cited:
- JP-A- 2013 085 419
- US-A- 5 932 974
- US-A- 6 008 593
- US-A- 6 037 720
- US-A1- 2005 184 682
- US-A1- 2015 061 611
- US-A1- 2018 019 666
- US-A1- 2020 112 257

## Description

### FIELD

The present disclosure relates to the technical field of power electronics, and in particular to a control circuit, a control method and a resonant converter.

### BACKGROUND

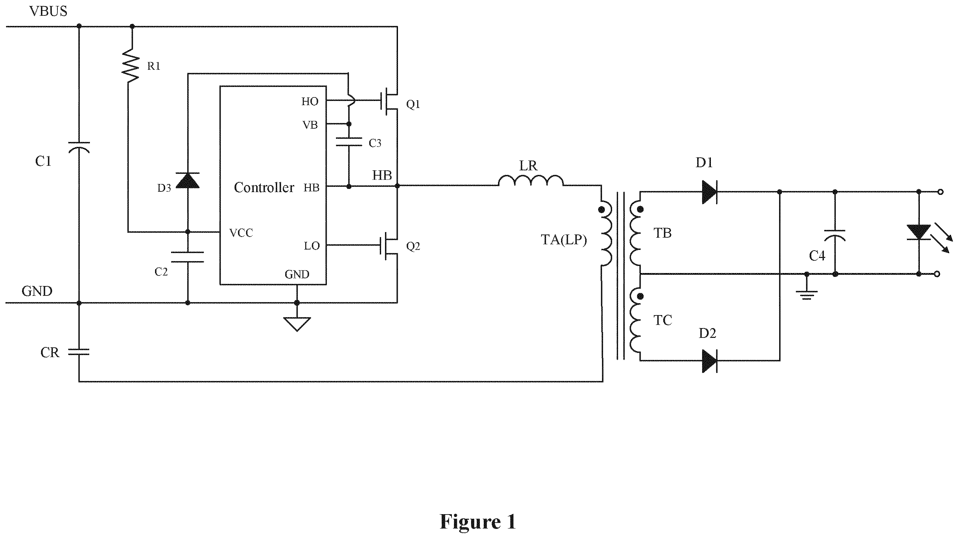

Figure 1 is a schematic circuit diagram illustrating an LLC resonant converter in the conventional technology. In a control scheme of the resonant converter shown in Figure 1, a capacitor C2 is charged since power-up of a system. When a voltage VCC at a common terminal of the capacitor C2 and a diode D3 reaches a first voltage threshold, a lower transistor Q2 is switched on, and capacitors C2 and C3 are charged. Since a time instant at which a voltage VB at a common terminal of the capacitor C3 and the diode D3 increases to a second voltage threshold, the resonant converter operates normally. However, in this way, at a time instant when the lower transistor Q2 is switched on, a larger resonance energy occurs in a resonant network formed by an inductor LR and a capacitor CR. Especially when an initial voltage at a half bridge midpoint HB of a half bridge formed by an upper transistor Q1 and the lower transistor Q2 approximates an input voltage Vbus, the lower transistor Q2 is constantly on, resulting in that the voltage of the capacitor CR resonates to an excessively high voltage. Therefore, a control circuit is provided according to the present disclosure to avoid overshoot of a voltage of a resonant capacitor in a time period during which the lower transistor in the resonant converter is on.

US 2020/112257A1 discloses a power converter controller, an asymmetric power converter and a method for operating a power converter. In some configurations, first and second primary side switches of the power converter are controlled, in each switching cycle such that the first switch is closed, then a second switch is closed and then again the first switch is closed.

US 2005/184682A1 discloses a ballast control IC with internal phase control dimming, where 15.6V Zener clamp on Vcc is applied.

US 6008 593A discloses a monolithic gate driver circuit for MOS gated devices, and a 5.6V internal Zener diode is configured to clamp the voltage between VCC and GND.

US 5932974A discloses a lamp ballast circuit which is protected against the removal of or failure of the lamp. When the lamp 140 is removed or fails, the voltage across the voltage divider rises and activates MOSFET 110 which clamps the VCC input to ground, thereby turning off the MOS gate driver chip 30 and cutting off the oscillating output supplied to the lamp 140.

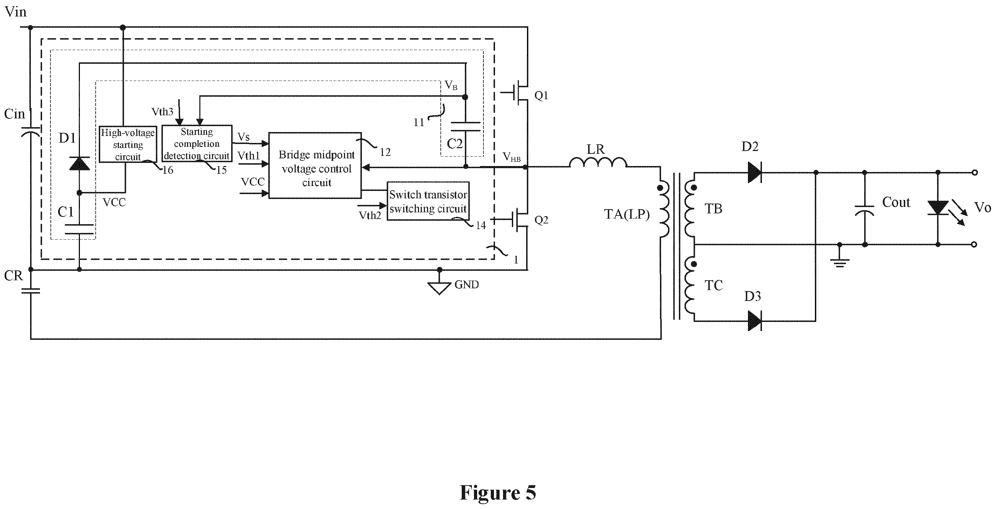

US 2015/061611A1 relates to switching power converters. At time t1, the bootstrap voltage VBST drops to be lower than the first low threshold VL1. Thus, the bootstrap refresh signal RFS provided by the first comparison module 104 changes to the first logic state (illustrated as logic high in FIG.5), which disables the second comparison module 201(through decreasing the third threshold signal Vth3 to reference ground potential in the example of FIG.5).

JP 2013085419A discloses a power conversion device that can control an operation stop period of an upper arm switching element to a minimum if detecting a temporary drop in bootstrap voltage due to a momentary anomaly. The voltage monitoring circuit 24 outputs an upper arm switching element driving signal (b) to an upper arm switching element 11 if the bootstrap voltage(c) is equal to or higher than a threshold voltage, and stops the output if the bootstrap voltage(c) falls below the threshold voltage.

US 2018/019666A1 discloses switched capacitor converter circuits. By slowly turning ON transistor Q4 412, the transistor Q4 412 can sink current from node SW2 to GND.

### SUMMARY

In view of this, a control circuit, a control method and a resonant converter are provided according to the independent claims, wherein a bridge midpoint voltage of the resonant converter is controlled before a lower transistor in the resonant converter is switched on, so as to avoid overshoot of a voltage of a resonant capacitor in a time period during which the lower transistor in the resonant converter is on.

A control circuit is provided according to a first aspect of the present disclosure. The control circuit is applied to a resonant converter. The resonant converter includes a first power switch transistor and a second power switch transistor. The second power switch transistor and the first power switch transistor are coupled in series sequentially between a ground potential terminal and a high potential terminal at an input side of the resonant converter. The control circuit includes a bridge midpoint voltage control circuit configured to control a bridge midpoint voltage in a process of starting the resonant converter, to prevent a voltage of a resonant capacitor from being excessively high in a time period during which the second power switch transistor is on. The bridge midpoint voltage represents a voltage at a common terminal of the first power switch transistor and the second power switch transistor.

In an embodiment, the control circuit further includes a driving voltage generation circuit. The driving voltage generation circuit is configured to receive an input voltage to generate a first power supply voltage and a second power supply voltage. The driving voltage generation circuit is charged through the input voltage to increase the first power supply voltage and the second power supply voltage.

In an embodiment, the driving voltage generation circuit includes a first capacitor, a first diode and a second capacitor. The first capacitor, the first diode and the second capacitor are coupled in series sequentially between the ground potential terminal and the common terminal of the first power switch transistor and the second power switch transistor. A common terminal of the first capacitor and the first diode is coupled to the high potential terminal at the input side of the resonant converter to receive the input voltage, so as to charge the first capacitor and the second capacitor. A voltage at the common terminal of the first capacitor and the first diode serves as the first supply voltage, and a voltage at a common terminal of the second capacitor and the first diode serves as the second power supply voltage.

In an embodiment, the bridge midpoint voltage control circuit includes a pull-down current circuit and is configured to output a valid first enable signal when the first power supply voltage is higher than a first voltage threshold in the process of starting the resonant converter, to control the pull-down current circuit to pull down the bridge midpoint voltage.

In an embodiment, the control circuit further includes a switch starting circuit. The switch transistor switching circuit is configured to control an on-off state of the second power switch transistor based on the bridge midpoint voltage in the process of starting the resonant converter, where the switch transistor switching circuit is configured to control the second power switch transistor to be switched off when the bridge midpoint voltage is higher thana second voltage threshold, and control the second power switch transistor to be switched on when the bridge midpoint voltage is lower than the second voltage threshold so as to increase the first power supply voltage and the second power supply voltage.

In an embodiment, the control circuit further includes a clamp circuit. The clamp circuit is configured to clamp the first power supply voltage at the first voltage threshold during a time period of pulling down the bridge midpoint voltage.

In an embodiment, the control circuit further includes a starting completion detection circuit. The starting completion detection circuit is configured to output, when the second power supply voltage is higher than a third voltage threshold, a valid starting completion signal, where the resonant converter is already started. An on-off state of each of the first power switch transistor and the second power switch transistor is controlled based on a pulse-width modulation (PWM) control signal.

In an embodiment, the bridge midpoint voltage control circuit includes a pull-down current circuit and is configured to output, when the first power supply voltage is higher than a first voltage threshold and in a case of an invalid starting completion signal, a valid first enable signal to control the pull-down current circuit to pull down the bridge midpoint voltage.

In an embodiment, the pull-down current circuit includes a first current source and a first resistor. A control terminal of the first current source is configured to receive the first enable signal, an input terminal of the first current source is coupled to the common terminal of the first power switch transistor and the second power switch transistor, an output terminal of the first current source is coupled to one terminal of the first resistor, and another terminal of the first resistor is grounded.

In an embodiment, the common terminal of the first capacitor and the first diode is coupled to the high potential terminal at the input side of the resonant converter via a second resistor.

In an embodiment, the control circuit further includes a high-voltage starting circuit. The common terminal of the first capacitor and the first diode is coupled to the high potential terminal at the input side of the resonant converter via the high-voltage starting circuit.

In an embodiment, the high-voltage starting circuit is configured to be activated in the process of starting the resonant converter.

In an embodiment, the high-voltage starting circuit is configured to be deactivated during a time period of pulling down the bridge midpoint voltage within the process of starting the resonant converter, to clamp the first power supply voltage at the first voltage threshold.

In an embodiment, the time period of pulling down the bridge midpoint voltage starts at a time instant when the first power supply voltage increases to the first voltage threshold, and ends at a time instant when the bridge midpoint voltage decreases to the second voltage threshold.

In an embodiment, the high-voltage starting circuit is configured to be deactivated since a time instant at which the process of starting the resonant converter ends.

In an embodiment, the high-voltage starting circuit is a second current source or a high-voltage metal-oxide-semiconductor (MOS) transistor.

A resonant converter is provided according to a second aspect of the present disclosure. The resonant converter includes: a transformer including a primary winding and a secondary winding; a resonant inductor and a resonant capacitor that are connected in series with the primary winding to form a resonant module; a second power switch transistor and a first power switch transistor that are coupled in series sequentially between a ground potential terminal and a high potential terminal at an input side of the resonant converter; and the control circuit according to any one of the above embodiments.

A control method is provided according to a third aspect of the present disclosure. The control method is applied to a resonant converter. The resonant converter includes a first power switch transistor and a second power switch transistor. The second power switch transistor and the first power switch transistor are coupled in series sequentially between a ground potential terminal and a high potential terminal at an input side of the resonant converter. The control method includes: controlling a bridge midpoint voltage in a process of starting the resonant converter, to prevent a voltage of a resonant capacitor from being excessively high in a time period during which the second power switch transistor is on. The bridge midpoint voltage represents a voltage at a common terminal of the first power switch transistor and the second power switch transistor.

In an embodiment, the method further includes: receiving an input voltage to generate a first power supply voltage and a second power supply voltage, where charging is performed through the input voltage to increase the first power supply voltage and the second power supply voltage.

In an embodiment, the controlling a bridge midpoint voltage includes: pulling down the bridge midpoint voltage when the first power supply voltage is higher than a first voltage threshold in the process of starting the resonant converter.

In an embodiment, the method further includes: controlling an on-off state of the second power switch transistor based on the bridge midpoint voltage in the process of starting the resonant converter.

In an embodiment, the controlling an on-off state of the second power switch transistor based on the bridge midpoint voltage in the process of starting the resonant converter includes :controlling the second power switch transistor to be switched off when the bridge midpoint voltage is higher thana second voltage threshold; and controlling the second power switch transistor to be switched on when the bridge midpoint voltage is lower than the second voltage threshold, to increase the first power supply voltage and the second power supply voltage.

In an embodiment, the control method further includes: clamping the first power supply voltage at the first voltage threshold while pulling down the bridge midpoint voltage.

In an embodiment, he pulling down the bridge midpoint voltage starts at a time instant when the first power supply voltage increases to the first voltage threshold, and ends at a time instant when the bridge midpoint voltage decreases to a second voltage threshold.

In an embodiment, the control method further includes: outputting a valid starting completion signal when the second power supply voltage is higher than a third voltage threshold, where the resonant converter is already started.

In an embodiment, the controlling a bridge midpoint voltage includes: pulling down the bridge midpoint voltage when the first power supply voltage is higher than a first voltage threshold and in a case of invalid starting completion signal.

In summary, a control circuit, a control method and a resonant converter are provided according to the present disclosure. The resonant converter includes a first power switch transistor and a second power switch transistor. The second power switch transistor and the first power switch transistor are coupled in series sequentially between a ground potential terminal and a high potential terminal at an input side of the resonant converter. The control circuit includes a bridge midpoint voltage control circuit. The bridge midpoint voltage control circuit is configured to control a bridge midpoint voltage in a process of starting the resonant converter, to prevent a voltage of a resonant capacitor from being excessively high in a time period during which the second power switch transistor is on. The bridge midpoint voltage represents a voltage at a common terminal of the first power switch transistor and the second power switch transistor. According to the present disclosure, the bridge midpoint voltage of the resonant converter is controlled to be lower than a certain voltage threshold before the second power switch transistor in the resonant converter is switched on, to avoid overshoot of a voltage of a resonant capacitor in a time period during which the second power switch transistor is on.

### BRIEF DESCRIPTION OF THE DRAWINGS

The above and other objects, features, and advantages of the present disclosure are apparent from the following description of embodiments of the present disclosure with reference to the drawings. In the drawings:
Figure 1 is a schematic circuit diagram illustrating a resonant converter in the conventional technology;
Figure 2 is a structural block diagram illustrating a resonant converter and a control circuit according to a first embodiment of the present disclosure;
Figure 3 is a circuit diagram illustrating the resonant converter and the control circuit according to the first embodiment of the present disclosure in detail;
Figure 4 is a schematic diagram illustrating operation waveforms of the resonant converter according to the present disclosure; and
Figure 5 is a structural block diagram illustrating a resonant converter and a control circuit according to a second embodiment of the present disclosure.

### DETAILED DESCRIPTION OF EMBODIMENTS

The present disclosure is described below based on embodiments. However, the present disclosure is not limited to these embodiments. In the following description of the present disclosure, specific details are described. Those skilled in the art can fully understand the present disclosure without the description of these details. Well-known methods, processes, flows, elements and circuits are not described in detail in order to avoid obscuring the essence of the present disclosure.

In addition, those skilled in the art should understand that the drawings provided herein are for illustrative purpose, and are unnecessarily drawn to scale.

In addition, it should be understood that in the following description, the term "circuit" indicates a loop that conducts electricity and is formed by at least one element or sub-circuit through electrical connection or electromagnetic connection. In a case that an element or circuit is referred to being "connected to" another element or "connected" between two nodes, the element or circuit may be directly coupled or connected to another element, or there is other element between the element or circuit and another element. The connection between elements may be physical, logical, or a combination thereof. In contrast, in a case that an element is referred to being "directly coupled" or "directly connected" to another element, there is no element between the element and another element.

Unless explicitly indicated herein, the words "including", "comprising" and the like throughout the specification and the claims should be interpreted as inclusive rather than exclusive or exhaustive, that is, "including but not limited to".

In the description of the present disclosure, it should be understood that the terms "first", "second" and the like are only for illustrative purpose rather than construed as indicating or implying relative importance. In addition, in the description of the present disclosure, the term "multiple" or "a plurality of" indicates two or more unless otherwise specified.

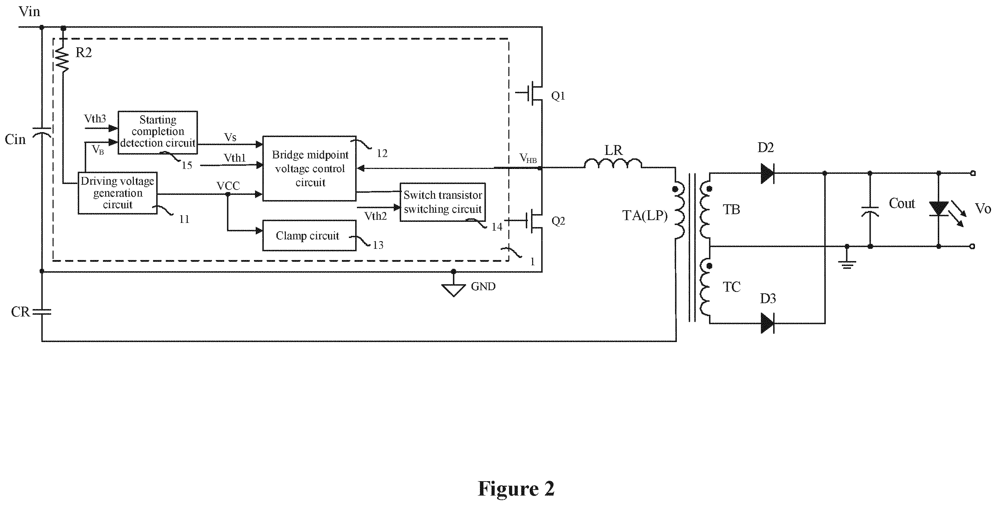

Figure 2 is a structural block diagram illustrating a resonant converter and a control circuit according to a first embodiment of the present disclosure. In the first embodiment, the resonant converter is a half-bridge resonant converter. As shown in Figure 2, the half-bridge resonant converter includes: a second power switch transistor Q2 and a first power switch transistor Q1 that are coupled in series sequentially between a ground potential terminal and a high potential terminal at an input side of the resonant converter; a transformer (including a primary winding TA, a secondary winding TB, and a secondary winding TC); a resonant capacitor CR and a resonant inductor LR that are connected in series with the primary winding TA to form a resonant module; a secondary rectifier circuit coupled to the secondary windings TB, TC, to generate an output signal at an output side of the resonant converter; and a control circuit 1.

In the first embodiment, the resonance module is coupled between a common terminal of the first power switch transistor Q1 and the second power switch transistor Q2and the ground potential terminal, which is not limited in the present disclosure. For example, in other embodiments, the resonant module is coupled between the common terminal of the first power switch transistor Q1 and the second power switch transistor Q2 and the high potential terminal at the input side of the resonant converter.

In the first embodiment, the number of the secondary winding is two, and the secondary rectifier circuit performs full-wave rectification, which is not limited in the present disclosure. For example, in other embodiments, the number of the secondary winding is one, and the secondary rectifier circuit performs full-bridge rectification.

In a process of starting the resonant converter, the control circuit 1 is configured to control a bridge midpoint voltage to decrease at least in a first time period before the end of the process of starting the resonant converter, and increase a first power supply voltage and a second power supply voltage during a second time period, in order to prevent a voltage of a resonant capacitor in the resonant converter from being excessively high. For example, in the first time period the control circuit 1 can control the bridge midpoint voltage to decrease to be a preset value, and in the second time period control the first power supply voltage and the second power supply voltage to increase, wherein the preset value can be relatively small or zero. When the first power supply voltage and the second power supply voltage are increased to be large enough, the process of starting the resonant converter ends, thus the resonant capacitor can operate normally. Since the bridge midpoint voltage is relatively small or zero before increasing the first power supply voltage and the second power supply voltage, the voltage of the resonant capacitor in the process of starting the resonant converter will not be too high, thereby reducing the resonance energy. In addition, the bridge midpoint voltage can be decreased in a step mode with at least one stage during the first time period. For example, the bridge midpoint voltage can be decreased with a fixed slop or with varied slops in a step mode.

In the first embodiment, the control circuit 1 includes a driving voltage generation circuit 11. The driving voltage generation circuit 11 is configured to receive an input voltage Vin, to generate a first power supply voltage VCC and a second power supply voltage V_{B}. The driving voltage generation circuit 11 is charged through the input voltage Vin, to increase the first power supply voltage VCC and the second power supply voltage V_{B}.

The control circuit 1 further includes a bridge midpoint voltage control circuit 12 and a clamp circuit 13. The bridge midpoint voltage control circuit 12 is configured to control a bridge midpoint voltage V_{HB} in a process of starting the resonant converter, to prevent a voltage of a resonant capacitor from being excessively high in a time period during which the second power switch transistor Q2 is on. The bridge midpoint voltage V_{HB} represents a voltage at the common terminal of the first power switch transistor Q1 and the second power switch transistor Q2. In the process of starting the resonant converter, the bridge midpoint voltage V_{HB} is pulled down since a time instant when the first power supply voltage VCC increases to be higher thana first voltage threshold Vth1. The clamp circuit 13 is configured to clamp the first power supply voltage VCC at the first voltage threshold Vth1 during a time period of pulling down the bridge midpoint voltage V_{HB}.

The control circuit 1 further includes a switch transistor control circuit (not shown in the drawings). The switch transistor control circuit is configured to control the first power switch transistor and the second power switch transistor to be switched on or off.

The control circuit 1 further includes a switch transistor switching circuit 14. The switch transistor switching circuit 14 is configured to control an on-off state of the second power switch transistorQ2 based on the bridge midpoint voltage V_{HB} in the process of starting the resonant converter. In a case that the bridge midpoint voltage V_{HB} is higher than a second voltage threshold Vth2, the switch transistor switching circuit 14 controls the switch transistor control circuit to control the second power switch transistor Q2 to be off. In a case that the bridge midpoint voltage V_{HB} is lower than the second voltage threshold Vth2, the switch transistor switching circuit 14 controls the switch transistor control circuit to control the second power switch transistor Q2 to be on, so as to increase the first power supply voltage and the second power supply voltage.

In the embodiments of the present disclosure, the time period of pulling down the bridge midpoint voltage starts at a time instant when the first power supply voltage increases to the first voltage threshold, and ends at a time instant when the bridge midpoint voltage decreases to the second voltage threshold.

The control circuit 1 further includes a starting completion detection circuit 15. In the process of starting the resonant converter, a valid starting completion signal Vs is outputted when the second power supply voltage V_{B} is higher thana third voltage threshold Vth3, and the resonant converter is already started. In the first embodiment, the valid starting completion signal indicates that the resonant converter is already started.

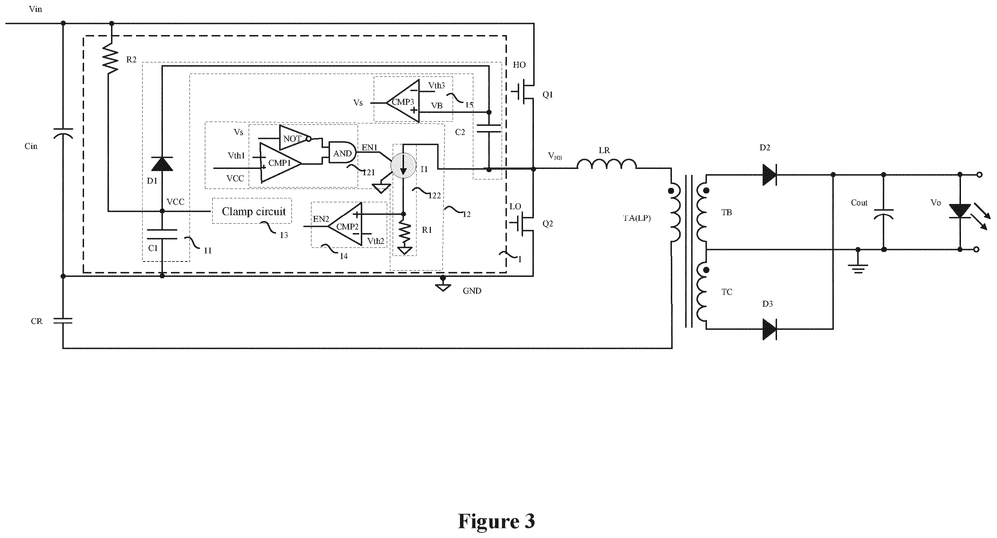

Figure 3 is a circuit diagram illustrating the resonant converter and the control circuit according to the first embodiment of the present disclosure in detail. As shown in Figure 3, the control circuit 1 includes a driving voltage generation circuit 11, a bridge midpoint voltage control circuit 12, a clamp circuit 13, a switch transistor switching circuit 14 and a starting completion detection circuit 15.

The driving voltage generation circuit 11 receives the input voltage Vin to generate the first power supply voltage VCC and the second power supply voltage V_{B}. The driving voltage generation circuit 11 is charged through the input voltage Vin to increase the first power supply voltage VCC and the second power supply voltage V_{B}. The driving voltage generation circuit 11 includes a first capacitor C1, a first diode D1 and a second capacitor C2.The first capacitor C1, the first diode D1 and the first capacitor C2 are coupled in series sequentially between the ground potential terminal and the common terminal of the first power switch transistor Q1 and the second power switch transistor Q2. A common terminal of the first capacitor C1 and the first diode D1 is coupled to the high potential terminal at the input side of the resonant converter to receive the input voltage Vin, so as to charge the first capacitor C1 and the second capacitor C2.A voltage at the common terminal of the first capacitorC1 and the first diode D1 serves as the first power supply voltage VCC. A voltage at a common terminal of the second capacitor C2 and the first diode D1 serves as the second power supply voltage V_{B}.

The control circuit 1 further includes a second resistor R2. The common terminal of the first capacitor C1 and the first diode D1 is coupled to the high potential terminal at the input side of the resonant converter via the second resistor R2.

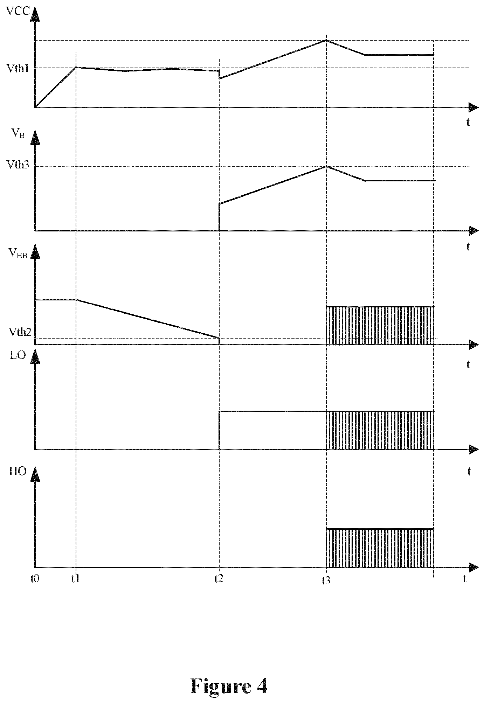

The bridge midpoint voltage control circuit 12 is configured to generate a valid first enable signal EN1 whenthe first power supply voltage VCC is higher than the first voltage threshold Vth1in the process of starting the resonant converter, to pull down the bridge midpoint voltage V_{HB}. The bridge midpoint control circuit 12 includes a first enable signal generation circuit 121 and a pull-down current circuit 122. The first enable signal generation circuit 121 includes a NOT gate circuit NOT, a comparator CMP1 and an AND gate circuit AND, and is configured to generate the first enable signal EN1. The NOT gate circuit NOT receives a starting completion detection signal Vs. An output terminal of the NOT gate circuit NOT is coupled to a first input terminal of the AND gate circuit AND. A first input terminal of the comparator CMP1 receives the first power supply voltage VCC, and a second input terminal of the comparator receives the first voltage threshold Vth1. The comparator CMP1 determines whether the first power supply voltage VCC reaches the first voltage threshold Vth1. An output terminal of the comparator CMP1 is coupled to a second input terminal of the AND gate circuit AND. An output terminal of the AND gate circuit outputs the first enable signal EN1. The starting completion detection signal Vs indicates a result that whether the process of starting the resonant converter ends. In the embodiments of the present disclosure, throughout the process of starting the resonant converter, the starting completion detection signal Vs is at a low level, which is not limited in the present disclosure. The pull-down current circuit 122 is configured to pull down the bridge midpoint voltage V_{HB} based on the first enable signal EN1. The pull-down current circuit 122 includes a first current source I1 and a first resistor R1. A control terminal of the first current source I1 is configured to receive the first enable signal EN1, an input terminal of the first current source I1 is coupled to the common terminal of the first power switch transistor Q1 and the second power switch transistor Q2, and an output terminal of the first current source I1 is coupled to one terminal of the first resistor R1.Another terminal of the first resistor R1 is grounded. In the process of starting the resonant converter, the AND gate circuit AND outputs a valid first enable signal EN1 (that is, at a high level) when the first power supply voltage VCC increases to the first voltage threshold Vth1 (that is, at a time instant t1 in Figure 4), to control the first current source I1 to pull down the bridge midpoint voltage V_{HB}.

The clamp circuit 13 clamps the first power supply voltage VCC at the first voltage threshold Vth1 during the time period of pulling down the bridge midpoint voltage V_{HB}.

The control circuit 1 further includes a switch transistor control circuit (not shown in the drawings). The switch transistor control circuit is configured to generate a control signal HO to control the first power switch transistor to be switched on or off, and generate a control signal LO to control the second power switch transistor to be switched on or off.

Further, the switch transistor switching circuit 14 is configured to generate a second enable signal EN2 based on the bridge midpoint voltage V_{HB} in the process of starting the resonant converter, to control the switch transistor control circuit (not shown in the drawings) to control an on-off state of the second power switch transistor Q2. The switch transistor switching circuit 14 includes a second comparator CMP2. In this embodiment, a non-inverting input terminal of the second comparator CMP2 receives the bridge midpoint voltage V_{HB}, and an inverting input terminal of the second comparator CMP2 receives the second voltage threshold Vth2, which is not limited in the present disclosure. In other embodiments, the inverting input terminal of the second comparator CMP2 receives the bridge midpoint voltage V_{HB}, and the non-inverting input terminal of the second comparator CMP2 receives the second voltage threshold Vth2. In the embodiments of the present disclosure, in a case that the bridge midpoint voltage V_{HB} is higher than the second voltage threshold Vth2, the second enable signal EN2 is at a high level. In this case, the second enable signal EN2 is invalid, and the switch transistor control circuit is controlled to generate a control signal LO at a low level to control the second power switch transistor Q2 to be switched off. In a case that the bridge midpoint voltage V_{HB} is lower than the second voltage threshold Vth2 (that is, since a time instant t2 in Figure 4), the second enable signal EN2 is at a low level. In this case, the second enable signal EN2 is valid, and the switch transistor control circuit is controlled to generate a control signal LO at a high level to control the second power switch transistorQ2 to be switched on. The first capacitor C1 and the capacitor C2 are charged through the input voltage Vin so as to increase the first driving voltage VCC and the second driving voltage VB.

In the first embodiment, the time period of pulling down the bridge midpoint voltage V_{HB} starts at a time instant when the first power supply voltage VCC increases to the first voltage threshold Vth1 (that is, at the time instant t1 in Figure 4), and ends at a time instant when the bridge midpoint voltage V_{HB} decreases to the second voltage threshold Vth2 (that is, at the time instant t2 in Figure 4).

In the first embodiment, the first enable signal generation circuit 121 receives only the starting completion detection signal Vs and the first power supply voltage VCC. That is, throughout a time interval from a time instant t1 to a time instant t3 in Figure 4, the pull-down current circuit 122 is activated. The second power switch transistor Q2 is on since the time instant t2, and the bridge midpoint voltage V_{HB} is directly equal to the ground potential. Therefore, the pull-down current circuit 122 pulls down the bridge midpoint voltage V_{HB} only during a time interval from the time instant t1 to the time instant t2, which is not limited in the present disclosure. For example, in other embodiments, the first enable signal generation circuit 121 receives the starting completion detection signal Vs, the first power supply voltage VCC and the control signal LO, such that the pull-down current circuit 122 is activated during the time interval from the time instant t1 to the time instant t2 during which the bridge midpoint voltage V_{HB} is pulled down.

After the second power switch transistor Q2 is switched on, the starting completion detection circuit l5 outputs a valid starting completion detection signal Vs when the second power supply voltage V_{B} is higher than the third voltage threshold Vth3 (that is, at a time instant t3 in Figure 4), and the resonant converter is already started. The starting completion detection circuit 15 includes a third comparator CMP3.A non-inverting input terminal of the third comparator CMP3 receives the second power supply voltage V_{B}, an inverting input terminal of the third comparator CMP3 receives the third voltage threshold Vth3, and an output terminal of the third comparator CMP3 outputs the starting completion detection signal Vs. When the second power supply voltage V_{B} is higher than the third voltage threshold Vth3, the third comparator CMP3 outputs the valid starting completion detection signal Vs (that is, at a high level), and the resonant converter is already started. Since a time instant at which the process of starting the resonant converter ends, the switch transistor control circuit generates pulse-duration modulation (PWM) control signals LO and HO, to control the first power switch transistor and the second power switch transistor to be complementary to each another.

Figure 4 is a schematic diagram illustrating operation waveforms of the resonant converter according to an embodiment of the present disclosure. The embodiments of the present disclosure are described by an example in which the non-inverting input terminal of the second comparator CMP2 receives the bridge midpoint voltage V_{HB} and the inverting input terminal of the second comparator CMP2receives the second voltage threshold Vth2, with reference to the operation waveforms in Figure 4 and the circuit in Figure 3.

As shown in Figure 4, in a time interval from a time instant t0 to a time instant t1, the resonant converter is powered on at the time instant t0. The first capacitor C1 is charged through the input voltage Vin, and the first power supply voltage VCC increases until the time instant t1 at which the first power supply voltage VCC is higher than the first voltage threshold Vth1. The AND gate circuit AND outputs a valid first enable signal EN1, such that the first current source I1 is controlled to pull down the bridge midpoint voltage V_{HB}. In a time interval from the time instant t1 to the time instant t2, the bridge midpoint voltage V_{HB} decreases since the time instant t1 under the action of the first current source I1 until the time instant t2 at which the bridge midpoint voltage V_{HB} reaches the second voltage threshold Vth2. The second comparator CMP2 outputs a valid second enable signal EN2, such that the second power switch transistor Q2 is switched on. Throughout the time interval from the time instant t1 to the time instant t2, the first power supply voltage VCC is clamped at the first voltage threshold Vth1. In the first time period of the time instant t1 to the time instant t2, the bridge midpoint voltage V_{HB} is controlled to decrease until the bridge midpoint voltage V_{HB} reaches the second voltage threshold Vth2. Here the second voltage threshold Vth2 is zero or greater than zero.

In a time interval from the time instant t2 to a time instant t3, the second power switch transistor Q2 is switched on at the time instant t2, such that the first capacitor C1 and the second capacitor C2 are charged, and the first power supply voltage VCC and the second power supply voltage V_{B} increase until the time instant t3 at which the second power supply voltage V_{B} reaches the third voltage threshold Vth3. The third comparator CMP3 outputs a valid starting completion detection signal Vs, and the process of starting the resonant converter ends. In the second time period of the time instant t2 to the time instant t3, the first power supply voltage VCC and the second power supply voltage V_{B} are increased to provide the power to the resonant converter, until the process of starting the resonant converter ends. Since the time instant t3, each of the first power switch transistor Q1 and the second power switch transistor Q2 are controlled based on the PWM control signal to operate normally.

In an embodiment, the bridge midpoint voltage V_{HB} is controlled to decrease in the time interval from the time instant t0 to the time instant t1 and the first time period of the time instant t1 to the time instant t2, in order to prevent the voltage of the resonant capacitor in the resonant converter from being excessively high in the process of starting the resonant converter. Thus, before the end of the process of the starting the resonant converter, the bridge midpoint voltage V_{HB} is controlled to decrease at least in the first time period.

Figure 5 is a structural block diagram illustrating a resonant converter and a control circuit according to a second embodiment of the present disclosure. The second embodiment differs from the first embodiment in that the control circuit 1 according to the second embodiment further includes a high-voltage starting circuit 16, and the common terminal of the first capacitor C1 and the first diode D1 is coupled to the high potential terminal at the input side of the resonant converter via the high-voltage starting circuit 16.

During the time period of pulling down the bridge midpoint voltage V_{HB} (that is, during the time interval from the time instant t1 to the time instant t2), the high-voltage starting circuit 16 is controlled to be deactivated, so as to clamp the first power supply voltage VCC at the first voltage threshold. During other time interval rather than the time interval from the time instant t1 to the time instant t2 within the process of starting the resonant converter (that is, the time interval from the time instant t0 to the time instant t1 and the time interval from the time instant t2 to the time instant t3 in Figure 4), the high-voltage starting circuit is controlled to be activated, so as to charge the first capacitor C1 and the second capacitor C2.

After the process of starting the resonant converter ends (that is, since the time instant t3 in Figure 4), the high-voltage starting circuit 16 is controlled to be deactivated. In this embodiment, the high-voltage starting circuit is deactivated when not charging the first capacitor C1 and the second capacitor C2, such that energy loss is reduced, thereby saving energy and reducing overall power consumption of the system, having greater advantages than the solution in which charging is performed via the second resistor R2 in the first embodiment.

In this embodiment, the high-voltage starting circuit 16 in the control circuit 1 performs clamping, which is not limited in the present disclosure. In other embodiments, the control circuit 1 includes a high-voltage starting circuit 16 and a clamp circuit. The clamp circuit performs clamping during the time period of pulling down the bridge midpoint voltage (that is, during the time interval from the time instant t1 to the time instant t2 in Figure 4), and the high-voltage starting circuit 16 is activated during the entire process of starting the resonant converter (that is, during the time interval from the time instant t0 to the time instant t3 in Figure 4).

Other details in the second embodiment are the same as that in the first embodiment and thus are not repeated here.

In an embodiment, the high-voltage starting circuit 16 is implemented by a second current source. An input terminal of the second current source receives the input voltage Vin, and an output terminal of the second current source is coupled to the common terminal of the first capacitor C1 and the first diode D1.When being activated, the second current source outputs a second current to charge the first capacitor C1 and the second capacitor C2.

In an embodiment, the high-voltage starting circuit is implemented by a high-voltage metal-oxide-semiconductor (MOS) transistor. A first power terminal of the high-voltage MOS transistor receives the input voltage Vin, and a second power terminal of the high-voltage MOS transistor is coupled to the common terminal of the first capacitor C1 and the first diode D1. In a case that the high-voltage MOS transistor is controlled to be on, the input voltage Vin charges the first capacitor C1 and the second capacitor C2.

In summary, a control circuit, a control method and a resonant converter are provided according to the present disclosure. The resonant converter includes a first power switch transistor and a second power switch transistor. The second power switch transistor and the first power switch transistor are coupled in series sequentially between the ground potential terminal and the high potential terminal at the input side of the resonant converter. The control circuit includes a bridge midpoint voltage control circuit, which is configured to control the bridge midpoint voltage in the process of starting the resonant converter, to prevent a voltage of a resonant capacitor from being excessively high in a time period during which the second power switch transistor is on. The bridge midpoint voltage represents a voltage at a common terminal of the first power switch transistor and the second power switch transistor.

Further variations and modifications are possible within the scope of the appended claims.

## Claims

1. A control circuit (1), applied to a resonant converter, wherein the resonant converter comprises a first power switch transistor (Q1) and a second power switch transistor (Q2), the second power switch transistor (Q2) and the first power switch transistor (Q1) are coupled in series sequentially between a ground potential terminal and a high potential terminal at an input side of the resonant converter, wherein the control circuit comprises:
a driving voltage generation circuit (11), configured to receive an input voltage (Vin) to generate a first power supply voltage (VCC) and a second power supply voltage (V_{B});
a bridge midpoint voltage control circuit (12), configured to receive the first power supply voltage (VCC), a first voltage threshold (Vth1) and a valid starting completion signal (Vs), in order to generate a valid first enable signal (EN1) when the first power supply voltage (VCC) reaches the first voltage threshold (Vth1), and to pull down a bridge midpoint voltage (V_{HB}),
wherein the bridge midpoint voltage control circuit (12) comprises a first enable signal generation circuit (121) and a pull-down current circuit (122), wherein the first enable signal generation circuit (121) is configured to receive the first power supply voltage (VCC) and generate the first enable signal (EN1), and the pull-down current circuit (122) is configured to pull down the bridge midpoint voltage (V_{HB}) based on the first enable signal (EN1) during a first time period until the bridge midpoint voltage (V_{HB}) reaches a second voltage threshold (Vth2), wherein the bridge midpoint voltage (V_{HB}) represents a voltage at a common terminal of the first power switch transistor (Q1) and the second power switch transistor (Q2), and the second power switch transistor (Q2) is switched off in the first time period; and
a switch transistor switching circuit (14), configured to control the second power switch transistor (Q2) to be on when the bridge midpoint voltage (V_{HB}) is lower than the second voltage threshold (Vth2), so as to increase the first power supply voltage (VCC) and the second power supply voltage (V_{B}) during a second time period, in order to avoid overshoot of a voltage of a resonant capacitor (CR) in the resonant converter;
wherein the driving voltage generation circuit (11) comprises a first capacitor (C1), a first diode (D1) and a second capacitor (C2), wherein the first capacitor (C1), the first diode (D1) and the second capacitor (C2) are coupled in series sequentially between the ground potential terminal and the common terminal of the first power switch transistor (Q1) and the second power switch transistor (Q2), a common terminal of the first capacitor (C1) and the first diode (D1) is coupled to the high potential terminal at the input side of the resonant converter to receive the input voltage (Vin), so as to charge the first capacitor (C1) and the second capacitor (C2), wherein a voltage at the common terminal of the first capacitor (C1) and the first diode (D1) serves as the first power supply voltage (VCC), and a voltage at a common terminal of the second capacitor (C2) and the first diode (D1) serves as the second power supply voltage (V_{B}); and
wherein the control circuit further comprises a starting completion detection circuit (15) configured to output the valid starting completion signal (Vs) when the second power supply voltage (V_{B}) reaches a third voltage threshold (Vth3), wherein the valid starting completion signal (Vs) is configured to indicate that the resonant converter is already started, and wherein, at a time instant, at which the second power supply voltage (V_{B}) reaches a third voltage threshold (Vth3), an on-off state of each of the first power switch transistor (Q1) and the second power switch transistor (Q2) is controlled by a switch transistor control circuit of the control circuit (1) based on a pulse-width modulation, PWM, control signal.

2. The control circuit (1) according to claim 1, wherein
the bridge midpoint voltage control circuit (12) is further configured to control the bridge midpoint voltage (V_{HB}) to decrease in a step mode with at least one stage during a first time period.

3. The control circuit (1) according to claim 1, wherein the switch transistor switching circuit (14) is further configured to control the second power switch transistor (Q2) to be switched off when the bridge midpoint voltage (V_{HB}) is higher than a second voltage threshold (Vth2).

4. The control circuit (1) according to claim 1, comprising:
a clamp circuit (13) configured to clamp the first power supply voltage (VCC) at the first voltage threshold (Vth1) during a time period of pulling down the bridge midpoint voltage (V_{HB}).

5. The control circuit (1) according to claim 1, wherein the pull-down current circuit (122) comprises a first current source (I1) and a first resistor (R1), wherein a control terminal of the first current source (I1) is configured to receive the first enable signal (EN1), an input terminal of the first current source (I1) is coupled to the common terminal of the first power switch transistor (Q1) and the second power switch transistor (Q2), an output terminal of the first current source (I1) is coupled to one terminal of the first resistor (R1), and another terminal of the first resistor (R1) is grounded.

6. The control circuit (1) according to claim 1, further comprising:
a high-voltage starting circuit (16) having a first terminal coupled to an input side of the resonant converter via the high-voltage starting circuit (16), and a second terminal coupled to the driving voltage generation circuit (11), wherein
the high-voltage starting circuit (16) is configured to be activated in the process of starting the resonant converter.

7. The control circuit (1) according to claim 6, wherein
the high-voltage starting circuit (16) is configured to be deactivated during a time period of pulling down the bridge midpoint voltage (V_{HB}) within the process of starting the resonant converter, to clamp the first power supply voltage (VCC) at a first voltage threshold (Vth1), and be activated in the process of starting the resonant converter.

8. The control circuit (1) according to claim 6, wherein
the high-voltage starting circuit (16) is a second current source or a high-voltage metal-oxide-semiconductor, MOS, transistor.

9. A resonant converter, comprising:
a transformer comprising a primary winding (TA) and a secondary winding (TB);
a resonant inductor (LR) and a resonant capacitor (CR) that are connected in series with the primary winding (TA) to form a resonant module;
a second power switch transistor (Q2) and a first power switch transistor (Q1) that are coupled in series sequentially between a ground potential terminal and a high potential terminal at an input side of the resonant converter; and
the control circuit (1) according to any one of claims 1 to 8.

10. A control method, applied to a resonant converter, wherein the resonant converter comprises a first power switch transistor (Q1) and a second power switch transistor (Q2), the second power switch transistor (Q2) and the first power switch transistor (Q1) are coupled in series sequentially between a ground potential terminal and a high potential terminal at an input side of the resonant converter, wherein the method comprises:
receiving an input voltage (Vin) to generate a first power supply voltage (VCC); and a second power supply voltage (V_{B});
generating a valid first enable signal (EN1) when the first power supply voltage (VCC) reaches a first voltage threshold (Vth1), and pulling down a bridge midpoint voltage (V_{HB}), wherein the generating a valid first enable signal (EN1) comprises: receiving the first power supply voltage (VCC), the first voltage threshold (Vth1) and a valid starting completion signal (Vs) for generating the first enable signal (EN1); and wherein the pulling down a bridge midpoint voltage (V_{HB}) comprises: pulling down the bridge midpoint voltage (V_{HB}) based on the first enable signal (EN1) during a first time period until the bridge midpoint voltage (V_{HB}) reaches a second voltage threshold (Vth2), wherein the bridge midpoint voltage (V_{HB}) represents a voltage at a common terminal of the first power switch transistor (Q1) and the second power switch transistor (Q2), and the second power switch transistor (Q2) is switched off in the first time period; and
controlling the second power switch transistor (Q2) to be on when the bridge midpoint voltage (V_{HB}) is lower than the second voltage threshold (Vth2), so as to increase the first power supply voltage (VCC) and the second power supply voltage (V_{B}) during a second time period, in order to avoid overshoot of a voltage of a resonant capacitor (CR) in the resonant converter;
outputting a valid starting completion signal (Vs) when a second power supply voltage (V_{B}) is higher than a third voltage threshold (Vth3), wherein the valid starting completion signal (Vs) indicates that the resonant converter is already started; and
wherein, at a time instant, at which the second power supply voltage (V_{B}) reaches a third voltage threshold (Vth3), controlling an on-off state of each of the first power switch transistor (Q1) and the second power switch transistor (Q2) based on a pulse-width modulation, PWM, control signal;
wherein the control circuit comprises a driving voltage generation circuit (11) comprising a first capacitor (C1), a first diode (D1) and a second capacitor (C2), wherein the first capacitor (C1), the first diode (D1) and the second capacitor (C2) are coupled in series sequentially between the ground potential terminal and the common terminal of the first power switch transistor (Q1) and the second power switch transistor (Q2), a common terminal of the first capacitor (C1) and the first diode (D1) is coupled to the high potential terminal at the input side of the resonant converter to receive the input voltage (Vin), so as to charge the first capacitor (C1) and the second capacitor (C2), wherein a voltage at the common terminal of the first capacitor (C1) and the first diode (D1) serves as the first power supply voltage (VCC), and a voltage at a common terminal of the second capacitor (C2) and the first diode (D1) serves as the second power supply voltage (V_{B}).

11. The control method according to claim 10, further comprising:
controlling the bridge midpoint voltage (V_{HB}) to decrease in a step mode with at least one stage during a first time period.

12. The control method according to claim 10, further comprising:
performing charging through the input voltage (Vin) to increase the first power supply voltage (VCC) and a second power supply voltage (V_{B}).

13. The control method according to claim 10, further comprising:
controlling the second power switch transistor (Q2) to be switched off when the bridge midpoint voltage (V_{HB}) is higher than a second voltage threshold (Vth2).

14. The control method according to claim 10, further comprising:
clamping the first power supply voltage (VCC) at the first voltage threshold (Vth1) while pulling down the bridge midpoint voltage (V_{HB}).

## Patentansprüche

1. Steuerschaltung (1), die auf einen Resonanzwandler angewandt ist, wobei der Resonanzwandler einen ersten Leistungsschaltertransistor (Q1) und einen zweiten Leistungsschaltertransistor (Q2) umfasst, wobei der zweite Leistungsschaltertransistor (Q2) und der erste Leistungsschaltertransistor (Q1) nacheinander zwischen einem Massepotentialanschluss und einem Hochpotentialanschluss an einer Eingangsseite des Resonanzwandlers in Reihe geschaltet sind, wobei die Steuerschaltung Folgendes umfasst:
eine Treiberspannungserzeugungsschaltung (11), die ausgebildet ist, eine Eingangsspannung (Vin) zu empfangen, um eine erste Versorgungsspannung (VCC) und eine zweite Versorgungsspannung (V_{B}) zu erzeugen;
eine Brückenmittelpunktspannungs-Steuerschaltung (12), die ausgebildet ist, die erste Versorgungsspannung (VCC), einen ersten Spannungsschwellwert (Vth1) und ein gültiges Startabschlusssignal (Vs) zu empfangen, um ein gültiges erstes Freigabesignal (EN1) zu erzeugen, wenn die erste Versorgungsspannung (VCC) den ersten Spannungsschwellwert (Vth1) erreicht, und um eine Brückenmittelpunktspannung (V_{HB}) abzusenken.
wobei die Brückenmittelpunktspannungs-Steuerschaltung (12) eine erste Freigabesignalgenerierungsschaltung (121) und eine Pull-Down-Stromschaltung (122) umfasst, wobei die erste Freigabesignalgenerierungsschaltung (121) ausgebildet ist, die erste Versorgungsspannung (VCC) zu empfangen und das erste Freigabesignal (EN1) zu erzeugen, und wobei die Pull-Down-Stromschaltung (122) ausgebildet ist, die Brückenmittelpunktspannung (V_{HB}) basierend auf dem ersten Freigabesignal (EN1) während eines ersten Zeitintervalls abzusenken, bis die Brückenmittelpunktspannung (V_{HB}) einen zweiten Spannungsschwellenwert (Vth2) erreicht, wobei die Brückenmittelpunktspannung (V_{HB}) eine Spannung an einem gemeinsamen Anschluss des ersten Leistungsschaltertransistors (Q1) und des zweiten Leistungsschaltertransistors (Q2) darstellt und der zweite Leistungsschaltertransistor (Q2) im ersten Zeitintervall abgeschaltet ist; und
eine Schaltertransistorschaltschaltung (14), die ausgebildet ist, den zweiten Leistungsschaltertransistor (Q2) anzusteuern, eingeschaltet zu sein, wenn die Brückenmittelspannung (V_{HB}) niedriger als der zweite Spannungsschwellwert (Vth2) ist, um die erste Versorgungsspannung (VCC) und die zweite Versorgungsspannung (V_{B}) während eines zweiten Zeitintervalls zu erhöhen, um ein Überschwingen einer Spannung eines Resonanzkondensators (CR) in dem Resonanzwandler zu vermeiden;
wobei die Treiberspannungserzeugungsschaltung (11) einen ersten Kondensator (C1), eine erste Diode (D1) und einen zweiten Kondensator (C2) umfasst, wobei der erste Kondensator (C1), die erste Diode (D1) und der zweite Kondensator (C2) in Reihe zwischen dem Massepotentialanschluss und dem gemeinsamen Anschluss des ersten Leistungsschaltertransistors (Q1) und des zweiten Leistungsschaltertransistors (Q2) geschaltet sind, wobei ein gemeinsamer Anschluss des ersten Kondensators (C1) und der ersten Diode (D1) mit dem Hochpotentialanschluss an der Eingangsseite des Resonanzwandlers verbunden ist, um die Eingangsspannung (Vin) zu empfangen und so den ersten Kondensator (C1) und den zweiten Kondensator (C2) zu laden, wobei eine Spannung an dem gemeinsamen Anschluss des ersten Kondensators (C1) und der ersten Diode (D1) als die erste Versorgungsspannung (VCC) dient und eine Spannung an einem gemeinsamen Anschluss des zweiten Kondensators (C2) und der ersten Diode (D1) als die zweite Versorgungsspannung (V_{B}) dient; und
wobei die Steuerschaltung ferner eine Start- und Abschlusserkennungsschaltung (15) umfasst, die ausgebildet ist, das gültige Startabschlusssignal (Vs) auszugeben, wenn die zweite Versorgungsspannung (V_{B}) einen dritten Spannungsschwellenwert (Vth3) erreicht, wobei das gültige Startabschlusssignal (Vs) ausgebildet ist, anzuzeigen, dass der Resonanzwandler bereits gestartet ist, und wobei an einem Zeitpunkt, an dem die zweite Versorgungsspannung (V_{B}) einen dritten Spannungsschwellenwert (Vth3) erreicht, ein Ein-Aus-Zustand jedes des ersten Leistungsschaltertransistors (Q1) und des zweiten Leistungsschaltertransistors (Q2) durch eine Schalttransistor-Steuerschaltung der Steuerschaltung (1) auf Basis eines Pulsweitenmodulations-, PWM-, Steuersignals gesteuert wird.

2. Steuerschaltung (1) nach Anspruch 1, wobei
die Brückenmittelpunktspannungs-Steuerschaltung (12) ferner ausgebildet ist, die Brückenmittelpunktspannung (V_{HB}) während eines ersten Zeitintervalls schrittweise mit mindestens einer Stufe zu verringern.

3. Steuerschaltung (1) nach Anspruch 1, wobei die Schaltertransistorschaltschaltung (14) des Schalttransistors ferner ausgebildet ist, den zweiten Leistungsschaltertransistor (Q2) zum Abschalten anzusteuern, wenn die Brückenmittelspannung (V_{HB}) höher als ein zweiter Spannungsschwellenwert (Vth2) ist.

4. Steuerschaltung (1) nach Anspruch 1, umfassend:
eine Begrenzungsschaltung (13), die ausgebildet ist, die erste Versorgungsspannung (VCC) während eines Zeitraums, in dem die Brückenmittelpunktspannung (V_{HB}) abgesenkt wird, auf den ersten Spannungsschwellwert (Vth1) zu begrenzen.

5. Steuerschaltung (1) nach Anspruch 1, wobei die Pull-Down-Stromschaltung (122) eine erste Stromquelle (I1) und einen ersten Widerstand (R1) umfasst, wobei ein Steueranschluss der ersten Stromquelle (I1) ausgebildet ist, das erste Freigabesignal (EN1) zu empfangen, wobei ein Eingangsanschluss der ersten Stromquelle (I1) mit dem gemeinsamen Eingang des ersten Leistungsschaltertransistors (Q1) und des zweiten Leistungsschaltertransistors (Q2) verbunden ist, wobei ein Ausgangsanschluss der ersten Stromquelle (I1) mit einem Anschluss des ersten Widerstands (R1) verbunden ist und ein anderer Anschluss des ersten Widerstands (R1) geerdet ist.

6. Steuerschaltung (1) nach Anspruch 1, ferner umfassend:
eine Hochspannungsstartschaltung (16) mit einem ersten Anschluss, der über die Hochspannungsstartschaltung (16) mit der Eingangsseite des Resonanzwandlers verbunden ist, und einem zweiten Anschluss, der mit der Treiberspannungserzeugungsschaltung (11) verbunden ist, wobei
die Hochspannungsstartschaltung (16) ausgebildet ist, bei dem Vorgang des Startens des Resonanzwandlers aktiviert zu werden.

7. Steuerschaltung (1) nach Anspruch 6, wobei
die Hochspannungsstartschaltung (16) während eines Zeitraums, in dem die Brückenmittelpunktspannung (V_{HB}) abgesenkt wird, ausgebildet ist, innerhalb des Vorgangs des Startens des Resonanzwandlers deaktiviert zu werden, um die erste Versorgungsspannung (VCC) auf einen ersten Spannungsschwellenwert (Vth1) zu begrenzen, und in dem Vorgang des Startens des Resonanzwandlers aktiviert zu werden.

8. Steuerschaltung (1) nach Anspruch 6, wobei
die Hochspannungsstartschaltung (16) eine zweite Stromquelle oder ein Hochspannungs-, Metall-Oxid-Halbleiter-, MOS-, Transistor ist.

9. Resonanzwandler, umfassend:
einen Transformator mit einer Primärwicklung (TA) und einer Sekundärwicklung (TB);
eine Resonanzspule (LR) und ein Resonanzkondensator (CR), die in Reihe mit der Primärwicklung (TA) geschaltet sind, um ein Resonanzmodul zu bilden;
ein zweiter Leistungsschaltertransistor (Q2) und ein erster Leistungsschaltertransistor (Q1), die nacheinander zwischen einem Massepotentialanschluss und einem Hochpotentialanschluss an einer Eingangsseite des Resonanzwandlers in Reihe geschaltet sind; und
die Steuerschaltung (1) nach einem der Ansprüche 1 bis 8.

10. Steuerungsverfahren, das auf einen Resonanzwandler angewandt wird, wobei der Resonanzwandler einen ersten Leistungsschaltertransistor (Q1) und einen zweiten Leistungsschaltertransistor (Q2) umfasst, wobei der zweite Leistungsschaltertransistor (Q2) und der erste Leistungsschaltertransistor (Q1) nacheinander zwischen einem Massepotentialanschluss und einem Hochpotentialanschluss an einer Eingangsseite des Resonanzwandlers in Reihe geschaltet sind, wobei das Verfahren umfasst:
Empfangen einer Eingangsspannung (Vin), um eine erste Versorgungsspannung (VCC) zu erzeugen, und einer zweiten Versorgungsspannung (V_{B});
Erzeugen eines gültigen ersten Freigabesignals (EN1), wenn die erste Versorgungsspannung (VCC) einen ersten Spannungsschwellenwert (Vth1) erreicht, und Absenken einer Brückenmittelpunktspannung (V_{HB}), wobei das Erzeugen eines gültigen ersten Freigabesignals (EN1) umfasst: Empfangen der ersten Versorgungsspannung (VCC), des ersten Spannungsschwellenwerts (Vth1) und eines gültigen Startabschlusssignals (Vs) zur Erzeugung des ersten Freigabesignals (EN1); und wobei das Absenken einer Brückenmittelspannung (V_{HB}) umfasst: Absenken der Brückenmittelspannung (V_{HB}) basierend auf dem ersten Freigabesignal (EN1) während eines ersten Zeitraums, bis die Brückenmittelspannung (V_{HB}) einen zweiten Spannungsschwellenwert (Vth2) erreicht, wobei die Brückenmittelspannung (V_{HB}) eine Spannung an einem gemeinsamen Anschluss des ersten Leistungsschaltertransistors (Q1) und des zweiten Leistungsschaltertransistors (Q2) darstellt und der zweite Leistungsschaltertransistor (Q2) in dem ersten Zeitraum abgeschaltet wird; und
Ansteuern des zweiten Leistungsschaltertransistors (Q2), eingeschaltet zu sein, wenn die Brückenmittelspannung (V_{HB}) niedriger als der zweite Spannungsschwellwert (Vth2) ist, um die erste Versorgungsspannung (VCC) und die zweite Versorgungsspannung (V_{B}) in einem zweiten Zeitintervall zu erhöhen und so ein Überschwingen einer Spannung eines Resonanzkondensators (CR) in dem Resonanzwandler zu vermeiden;
Ausgeben eines gültigen Startabschlusssignals (Vs), wenn eine zweite Versorgungsspannung (V_{B}) größer als ein dritter Spannungsschwellwert (Vth3) ist, wobei das gültige Startabschlusssignal (Vs) anzeigt, dass der Resonanzwandler bereits gestartet ist; und
wobei zu einem Zeitpunkt, an dem die zweite Versorgungsspannung (V_{B}) einen dritten Spannungsschwellenwert (Vth3) erreicht, Ansteuern eines Ein-Aus-Zustand jedes des ersten Leistungsschaltertransistors (Q1) und des zweiten Leistungsschaltertransistors (Q2) auf der Grundlage eines Pulsweitenmodulations-, PWM-, Steuersignals;
wobei die Steuerschaltung eine Treiberspannungserzeugungsschaltung (11) umfasst, die einen ersten Kondensator (C1), eine erste Diode (D1) und einen zweiten Kondensator (C2) umfasst, wobei der erste Kondensator (C1), die erste Diode (D1) und der zweite Kondensator (C2) nacheinander zwischen dem Massepotentialanschluss und dem gemeinsamen Anschluss des ersten Leistungsschaltertransistors (Q1) und des zweiten Leistungsschaltertransistors (Q2) in Reihe geschaltet sind, wobei ein gemeinsamer Anschluss des ersten Kondensators (C1) und der ersten Diode (D1) mit dem Hochpotentialanschluss an der Eingangsseite des Resonanzwandlers verbunden ist, um die Eingangsspannung (Vin) zu empfangen und so den ersten Kondensator (C1) und den zweiten Kondensator (C2) zu laden, wobei eine Spannung an dem gemeinsamen Anschluss des ersten Kondensators (C1) und der ersten Diode (D1) als die erste Versorgungsspannung (VCC) dient und eine Spannung an einem gemeinsamen Anschluss des zweiten Kondensators (C2) und der ersten Diode (D1) als die zweite Versorgungsspannung (V_{B}) dient.

11. Steuerungsverfahren nach Anspruch 10, ferner umfassend:
Ansteuern der Brückenmittelpunktspannung (V_{HB}) zur schrittweisen Verringerung mit mindestens einer Stufe während eines ersten Zeitintervalls.

12. Steuerungsverfahren nach Anspruch 10, ferner umfassend:
Durchführen eines Ladens durch die Eingangsspannung (Vin), um die erste Versorgungsspannung (VCC) und eine zweite Versorgungsspannung (V_{B}) zu erhöhen.

13. Steuerungsverfahren nach Anspruch 10, ferner umfassend:
Ansteuern des zweiten Leistungsschaltertransistors (Q2) zum Abschalten, wenn die Brückenmittelspannung (V_{HB}) größer als ein zweiter Spannungsschwellenwert (Vth2) ist.

14. Steuerungsverfahren nach Anspruch 10, ferner umfassend:
Begrenzen der ersten Versorgungsspannung (VCC) auf den ersten Spannungsschwellwert (Vth1), während die Brückenmittelpunktspannung (V_{HB}) abgesenkt wird.

## Revendications

1. Circuit de commande (1), appliqué à un convertisseur résonant, dans lequel le convertisseur résonant comprend un premier transistor de commutation de puissance (Q1) et un second transistor de commutation de puissance (Q2), le second transistor de commutation de puissance (Q2) et le premier transistor de commutation de puissance (Q1) sont couplés en série séquentiellement entre une borne de potentiel de masse et une borne de potentiel élevé au niveau d'un côté d'entrée du convertisseur résonant, dans lequel le circuit de commande comprend :
un circuit de génération de tension de commande (11), configuré pour recevoir une tension d'entrée (Vin) pour générer une première tension d'alimentation (VCC) et une seconde tension d'alimentation (V_{B}) ;
un circuit de commande de tension de point médian de pont (12), configuré pour recevoir la première tension d'alimentation (VCC), un premier seuil de tension (Vth1) et un signal d'achèvement de démarrage valide (V_{S}), afin de générer un premier signal d'activation (EN1) valide lorsque la première tension d'alimentation (VCC) atteint le premier seuil de tension (Vth1), et de baisser une tension de point médian de pont (V_{HB}),
dans lequel le circuit de commande de tension de point médian de pont (12) comprend un premier circuit de génération de signal d'activation (121) et un circuit de courant d'abaissement (122), dans lequel le premier circuit de génération de signal d'activation (121) est configuré pour recevoir la première tension d'alimentation (VCC) et générer le premier signal d'activation (EN1), et le circuit de courant d'abaissement (122) est configuré pour baisser la tension de point médian de pont (V_{HB}) sur la base du premier signal d'activation (EN1) pendant une première période de temps jusqu'à ce que la tension de point médian de pont (V_{HB}) atteigne un deuxième seuil de tension (Vth2), dans lequel la tension de point médian de pont (V_{HB}) représente une tension à une borne commune du premier transistor de commutation de puissance (Q1) et du second transistor de commutation de puissance (Q2), et le second transistor de commutation de puissance (Q2) est éteint pendant la première période de temps ; et
un circuit de commutation de transistor de commutation (14), configuré pour commander le second transistor de commutation de puissance (Q2) pour qu'il soit activé lorsque la tension de point médian de pont (V_{HB}) est inférieure au deuxième seuil de tension (Vth2), de manière à augmenter la première tension d'alimentation (VCC) et la seconde tension d'alimentation (V_{B} ) pendant une seconde période de temps, afin d'éviter un dépassement d'une tension d'un condensateur résonant (CR) dans le convertisseur résonant ;
dans lequel le circuit de génération de tension de commande (11) comprend un premier condensateur (C1), une première diode (D1) et un second condensateur (C2), dans lequel le premier condensateur (C1), la première diode (D1) et le second condensateur (C2) sont couplés en série séquentiellement entre la borne de potentiel de masse et la borne commune du premier transistor de commutation de puissance (Q1) et du second transistor de commutation de puissance (Q2), une borne commune du premier condensateur (C1) et de la première diode (D1) est couplé à la borne de potentiel élevé au niveau du côté d'entrée du convertisseur résonant pour recevoir la tension d'entrée (Vin), de manière à charger le premier condensateur (C1) et le second condensateur (C2), dans lequel une tension à la borne commune du premier condensateur (C1) et de la première diode (D1) sert de première tension d'alimentation (VCC), et une tension à une borne commune du second condensateur (C2) et de la première diode (D1) sert de seconde tension d'alimentation (V_{B}) ; et
dans lequel le circuit de commande comprend en outre un circuit de détection d'achèvement de démarrage (15) configuré pour délivrer en sortie le signal d'achèvement de démarrage valide (Vs) lorsque la seconde tension d'alimentation (V_{B}) atteint un troisième seuil de tension (Vth3), dans lequel le signal d'achèvement de démarrage valide (Vs) est configuré pour indiquer que le convertisseur résonant est déjà démarré, et dans lequel, à un instant, à partir duquel la seconde tension d'alimentation (V_{B}) atteint un troisième seuil de tension (Vth3), un état marche-arrêt de chacun du premier transistor de commutation de puissance (Q1) et du second transistor de commutation de puissance (Q2) est commandé par un circuit de commande de transistor de commutation du circuit de commande (1) sur la base d'un signal de commande de modulation d'impulsions en largeur, PWM.

2. Circuit de commande (1) selon la revendication 1, dans lequel
le circuit de commande de tension de point médian de pont (12) est en outre configuré pour commander la tension de point médian de pont (V_{HB}) pour diminuer dans un mode par étape avec au moins une phase pendant une première période de temps.

3. Circuit de commande (1) selon la revendication 1, dans lequel le circuit de commutation de transistor de commutation (14) est en outre configuré pour commander le second transistor de commutation de puissance (Q2) pour qu'il s'éteigne lorsque la tension de point médian de pont (V_{HB}) est supérieure à un deuxième seuil de tension (Vth2).

4. Circuit de commande (1) selon la revendication 1, comprenant :
un circuit de verrouillage (13) configuré pour verrouiller la première tension d'alimentation (VCC) au premier seuil de tension (Vth1) pendant une période d'abaissement de la tension de point médian de pont (V_{HB}).

5. Circuit de commande (1) selon la revendication 1, dans lequel le circuit de courant d'abaissement (122) comprend une première source de courant (I1) et une première résistance (R1), dans lequel une borne de commande de la première source de courant (11) est configurée pour recevoir le premier signal d'activation (EN1), une borne d'entrée de la première source de courant (I1) est couplée à la borne commune du premier transistor de commutation de puissance (Q1) et du second transistor de commutation de puissance (Q2), une borne de sortie de la première source de courant (I1) est couplée à une borne de la première résistance (R1), et une autre borne de la première résistance (R1) est mise à la terre.

6. Circuit de commande (1) selon la revendication 1, comprenant en outre :
un circuit de démarrage haute tension (16) comportant une première borne couplée à un côté d'entrée du convertisseur résonant par le biais du circuit de démarrage haute tension (16), et une seconde borne couplée au circuit de génération de tension de commande (11), dans lequel
le circuit de démarrage haute tension (16) est configuré pour être activé lors du processus de démarrage du convertisseur résonant.

7. Circuit de commande (1) selon la revendication 6, dans lequel
le circuit de démarrage haute tension (16) est configuré pour être désactivé pendant une période d'abaissement de la tension de point médian de pont (V_{HB}) au cours du processus de démarrage du convertisseur résonant, pour verrouiller la première tension d'alimentation (VCC) à un premier seuil de tension (Vth1), et être activé au cours du processus de démarrage du convertisseur résonant.

8. Circuit de commande (1) selon la revendication 6, dans lequel
le circuit de démarrage haute tension (16) est une seconde source de courant ou un transistor semi-conducteur à oxyde métallique, MOS, haute tension.

9. Convertisseur résonant, comprenant :
un transformateur comprenant un enroulement primaire (TA) et un enroulement secondaire (TB) ;
un inducteur résonant (LR) et un condensateur résonant (CR) qui sont connectés en série avec l'enroulement primaire (TA) pour former un module résonant ;
un second transistor de commutation de puissance (Q2) et un premier transistor de commutation de puissance (Q1) qui sont couplés en série séquentiellement entre une borne de potentiel de masse et une borne de potentiel élevé au niveau d'un côté d'entrée du convertisseur résonant ; et
le circuit de commande (1) selon l'une quelconque des revendications 1 à 8.

10. Procédé de commande, appliqué à un convertisseur résonant, dans lequel le convertisseur résonant comprend un premier transistor de commutation de puissance (Q1) et un second transistor de commutation de puissance (Q2), le second transistor de commutation de puissance (Q2) et le premier transistor de commutation de puissance (Q1) sont couplés en série séquentiellement entre une borne de potentiel de masse et une borne de potentiel élevé au niveau d'un côté d'entrée du convertisseur résonant, dans lequel le procédé de commande comprend :
la réception d'une tension d'entrée (Vin) pour générer une première tension d'alimentation (VCC) ; et une seconde tension d'alimentation (V_{B}) ;
la génération d'un premier signal d'activation (EN1) valide lorsque la première tension d'alimentation (VCC) atteint un premier seuil de tension (Vth1), et l'abaissement d'une tension de point médian de pont (V_{HB}), dans lequel la génération d'un premier signal d'activation (EN1) valide comprend : la réception de la première tension d'alimentation (VCC), du premier seuil de tension (Vth1) et d'un signal d'achèvement de démarrage valide (Vs) pour la génération du premier signal d'activation (EN1) ; et
dans lequel l'abaissement d'une tension de point médian de pont (V_{HB}) comprend : l'abaissement de la tension de point médian de pont (V_{HB}) sur la base du premier signal d'activation (EN1) pendant une première période de temps jusqu'à ce que la tension de point médian de pont (V_{HB}) atteigne un deuxième seuil de tension (Vth2), dans lequel la tension de point médian de pont (V_{HB}) représente une tension au niveau d'une borne commune du premier transistor de commutation de puissance (Q1) et du second transistor de commutation de puissance (Q2), et le second transistor de commutation de puissance (Q2) est éteint pendant la première période de temps ; et
la commande du second transistor de commutation de puissance (Q2) pour qu'il soit activé lorsque la tension de point médian de pont (V_{HB}) est inférieure au deuxième seuil de tension (Vth2), de manière à augmenter la première tension d'alimentation (VCC) et la seconde tension d'alimentation (V_{B}) pendant une seconde période de temps, afin d'éviter un dépassement d'une tension d'un condensateur résonant (CR) dans le convertisseur résonant ;
la délivrance en sortie d'un signal d'achèvement de démarrage valide (Vs) lorsqu'une seconde tension d'alimentation (V_{B}) est supérieure à un troisième seuil de tension (Vth3), dans lequel le signal d'achèvement de démarrage valide (Vs) indique que le convertisseur résonant est déjà démarré ; et
dans lequel, à un instant, auquel la seconde tension d'alimentation (V_{B}) atteint un troisième seuil de tension (Vth3), la commande d'un état marche-arrêt de chacun du premier transistor de commutation de puissance (Q1) et du second transistor de commutation de puissance (Q2) sur la base d'un signal de commande de modulation d'impulsions en largeur, PWM ;
dans lequel le circuit de commande comprend un circuit de génération de tension de commande (11) comprenant un premier condensateur (C1), une première diode (D1) et un second condensateur (C2), dans lequel le premier condensateur (C1), la première diode (D1) et le second condensateur (C2) sont couplés en série séquentiellement entre la borne de potentiel de masse et la borne commune du premier transistor de commutation de puissance (Q1) et du second transistor de commutation de puissance (Q2), une borne commune du premier condensateur (C1) et de la première diode (D1) est couplé à la borne de potentiel élevé au niveau du côté d'entrée du convertisseur résonant pour recevoir la tension d'entrée (Vin), de manière à charger le premier condensateur (C1) et le second condensateur (C2), dans lequel une tension à la borne commune du premier condensateur (C1) et de la première diode (D1) sert de première tension d'alimentation (VCC),
et une tension à une borne commune du second condensateur (C2) et de la première diode (D1) sert de seconde tension d'alimentation (V_{B}).

11. Procédé de commande selon la revendication 10, comprenant en outre :
la commande de la tension de point médian de pont (V_{HB}) pour diminuer dans un mode par étape avec au moins une phase pendant une première période de temps.

12. Procédé de commande selon la revendication 10, comprenant en outre :
la réalisation d'une charge par l'intermédiaire de la tension d'entrée (Vin) pour augmenter la première tension d'alimentation (VCC) et une seconde tension d'alimentation (V_{B)}.

13. Procédé de commande selon la revendication 10, comprenant en outre :
la commande du second transistor de commutation de puissance (Q2) pour qu'il soit éteint lorsque la tension de point médian de pont (V_{HB}) est supérieure à un deuxième seuil de tension (Vth2).

14. Procédé de commande selon la revendication 10, comprenant en outre :
le verrouillage de la première tension d'alimentation (VCC) au premier seuil de tension (Vth1) pendant l'abaissement de la tension de point médian de pont (V_{HB}).
